# EUROPÄISCHE PATENTSCHRIFT

(11) **EP 2 122 587 B1**
(45) Veröffentlichungstag und Bekanntmachung des Hinweises auf die Patenterteilung: **20.03.2019**
(21) Anmeldenummer: 07846607.5
(22) Anmeldetag: 15.11.2007
(51) Int. Cl.: G06F 21/62, G06F 21/78, G06Q 20/34, G07F 7/10

(54) **VERFAHREN ZUM ZUGRIFF AUF EINEN TRAGBAREN SPEICHERDATENTRÄGER MIT ZUSATZMODUL UND TRAGBARER SPEICHERDATENTRÄGER**
METHOD FOR ACCESS TO A PORTABLE MEMORY DATA SUPPORT WITH AUXILIARY MODULE AND PORTABLE MEMORY DATA SUPPORT
PROCÉDÉ D'ACCÈS À UN SUPPORT DE DONNÉES DE MÉMOIRE PORTABLE COMPORTANT UN MODULE SUPPLÉMENTAIRE ET SUPPORT DE DONNÉES DE MÉMOIRE PORTABLE

(30) Priorität: 16.11.2006 DE 102006054024; 19.10.2007 DE 102007050463
(43) Veröffentlichungstag der Anmeldung: 25.11.2009
(73) Patentinhaber: Giesecke+Devrient Mobile Security GmbH, 81677 München (DE)
(72) Erfinder: BIRMAN, Boris, 84034 Landshut (DE); GÖTZE, Frank, 81929 München (DE); BEINLICH, Stephan, 80708 München (DE); STEPHAN, Elmar, 41927 Mairena del Alyarafe (ES); GUTER, Fabian, 85622 Feldkirchen (DE); BARTSCH, Armin, 86899 Landsberg a. Lech (DE)
(86) Internationale Anmeldenummer: PCT/EP2007/009892
(87) Internationale Veröffentlichungsnummer: WO 2008/058741

(56) Entgegenhaltungen:
- EP-A- 0 940 767
- EP-A- 1 473 664
- EP-A- 1 722 305
- WO-A-2005/026923
- WO-A-2006/090393
- US-A1- 2004 210 715
- US-A1- 2005 138 303
- V.A.: "Referenzparameter" WIKIPEDIA, [Online] 20. Oktober 2006 (2006-10-20), XP002511685 Gefunden im Internet: URL:http://de.wikipedia.org/w/index.php?ti tle=Referenzparameter&oldid=22817024> [gefunden am 2009-01-20]
- HÜSEYIN TASKIN: "Remote Procedure Call" GOOGLE CACHE, [Online] 9. Januar 1996 (1996-01-09), XP002511686 Universität Paderborn Gefunden im Internet: URL:http://74.125.77.132/search?q=cache:A9 DciJ1pM6gJ:wwwcs.uni-paderborn.de/cs/heiss /lehre/ws95/projektgruppe/rpc.ps.gz+rpc+%2 2call+by+reference%22&hl=de&ct=clnk&cd=10& gl=de> [gefunden am 2009-01-20]
- K. GEIHS, G. MÜHL: "Verteilte Systeme - Architekturen und Dienste" VORLESUNG, [Online] 2004, XP002511687 TU Berlin Gefunden im Internet: URL:http://kbs.cs.tu-berlin.de/ivs/Lehre/S S04/VSAD/04.pdf> [gefunden am 2009-01-20]

## Beschreibung

Die Erfindung betrifft ein Verfahren zum Zugriff auf einen tragbaren Speicherdatenträger mit einem Speicherelement und wenigstens einem Zusatzmodul, einen tragbaren Speicherdatenträger sowie ein Terminal. Insbesondere betrifft sie eine Massenspeicherkarte mit einem Smartcard-IC.

Portable Massenspeicher mit immer größer werdender Speicherkapazität werden zunehmend häufiger-in verschiedensten elektronischen Geräten verwendet. Auf ihnen können digitale Inhalte oder Text-, Bilder-, Audio- oder Video-Daten oder ähnliches gespeichert werden. Portable Massenspeicher weisen dabei den Vorteil auf, daß sie von verschiedenen elektronischen Geräten wie PCs, PDAs, SmartPhones, Digitalkameras, Audiogeräten, usw. gelesen und gegebenenfalls beschrieben werden können. Die portablen Massenspeicher erlauben so ein einfaches Sichern und Transportieren digitaler Inhalte.

Für portable Massenspeicher wurden verschiedene Standards entwickelt, die unterschiedliche Verbreitung finden. Verbreitete Massenspeicher-Typen sind Multimedia Cards (MMC), Secure Digital Memory Cards (SD Cards), MicroSD Karten, Memory Sticks (USB Sticks) aber auch CDs, DVDs etc.

Es ist auch bereits bekannt, tragbare Datenträger der vorgenannten Art zusätzlich mit Zusatz- insbesondere Sicherheitsfunktionen auszustatten, um beispielsweise bestimmte digitale Inhalte des Speichers vor unberechtigtem Zugriff zu schützen. WO 2006/090393 A2 offenbart ein Verfahren zum Zugriff eines Computers auf ein Peripheriegerät, das über eine standardisierte Schnittstelle mit dem Computer verbunden ist. Das Peripheriegerät kann insbesondere eine über eine USB-Schnittstelle mit dem Computer verbundene Massenspeichereinheit mit einer Zusatzfunktion, etwa einer Authentisierungsfunktion sein. Aus Sicherheitsgründen ist die Nutzbarkeit der Betriebssystemfunktionen beim Zugriff auf die Massenspeichereinheit grundsätzlich begrenzt. Um einem Computer in einem Datenaustausch mit einer Massenspeichereinheit dennoch die Nutzung sonst gesperrter Betriebssystemfunktionen zu ermöglichen wird vorgeschlagen, entsprechende Kommandos in technisch nicht sinnvollen Folgen von Standardkommandos zu kodieren, die von einer speziellen Anwendung auf der Massenspeichereinheit erkannt und ausgeführt werden. Die Nutzung des Verfahrens bedingt, daß geeignete unbenutzte Standardkommandos existieren und die im Verfahren eingesetzten Kommandos auch auf Dauer nicht mit einer technischen Wirkung versehen werden sollen. Das eine ist nicht immer gegeben, das andere kann zukünftige Entwicklungen behindern.

Aus der DE 698 15 258 sind programmierbare löschbare und nichtflüchtige Speicher bekannt, die eine lese- und/oder schreibschützbare Zone aufweisen, wobei eine absolut festgelegte speicherunabhängige Grenzadresse die schreibschützbare Zone von den restlichen Speicherplätzen abgrenzt und wählbar ist, auf welcher Seite der Grenzadresse sich die schreibschützbare Zone befinden soll. Zudem kann ein Schutzwort in ein Schutzregister geschrieben werden, um Ort und Größe der schreibschützbaren Zone zu definieren. Aus der EP 1 304 702 sind weiter eine portable Halbleiter-Speicherkarte und ein Datenlesegerät in einer elektronischen Vorrichtung bekannt, mit dem digitale Inhalte geschützt werden können. Die Speicherkarte umfaßt einen wiederbeschreibbaren, nichtflüchtigen Speicher mit einem Authentifizierungsbereich und einem nicht zu authentifizierenden Bereich. Die Speicherkarte umfaßt zudem einen Steuerungsschaltkreis mit einer Steuerungseinheit für den nicht zu authentifizierenden Bereich und eine Authentifizierungseinheit, die einen Authentifizierungsprozeß ausführt, um zu prüfen, ob die elektronische Vorrichtung berechtigt ist, über eine Zugangssteuerung auf den Authentifizierungsbereich zuzugreifen. Dabei kommuniziert die elektronische Vorrichtung verschlüsselt und die Zugangssteuerung entscheidet nach Entschlüsselung der Befehle, ob auf den geschützten Bereich zugegriffen wird. Diese bekannten Lösungen haben den Nachteil, daß jeweils spezielle Treiber erforderlich sind, um auf eine Speicherkarte zuzugreifen. Die Einrichtung spezieller Treiber ist aber aufwendig und unpraktisch, da für unterschiedliche Geräte mit unterschiedlichen Betriebssystemen jeweils eigene Treiber entwickelt und implementiert werden müssen.

US 2005/0138303 A1 offenbart einen Speicherdatenträger mit einem standardisierten Speicherelement, einem Controller zur Verwaltung des Speicherelementes und einem zusätzlichen IC-Chip, auf den von einem Host über den Speicherelementcontroller mittels üblicher Zugriffskommandos zugegriffen werden kann. Die Datenübertragung zwischen Speicherdatenträger und Host erfolgt unter Verwendung eines auf das Speicherelement abgestimmten Übertragungsprotokolles. Zur Ermöglichung der Zugriffe sind in dem Speicher bestimmte Adressblöcke für das Schreiben und Lesen von Daten reserviert. Um Daten an den IC-Chip zu senden, wird einem üblichen Schreibkommando eine Adresse in dem entsprechenden reservierten Speicherbereich zugeordnet. Für den IC-Chip vorgesehene Anwendungsdaten werden in das Datenfeld des Kommandos gesetzt. Erkennt der Speicherelementcontroller, dass ein Zugriffskommando als Adresse eine Adresse in dem reservierten Speicherbereich führt, interpretiert er die in dem Zugriffsbefehl enthaltenen Anwendungsdaten als Kommandos für den IC-Chip. Er extrahiert das Kommando und schreibt es in den reservierten Speicherbereich. Das bekannte Verfahren erfordert die Reservierung von Speicherbereich, der damit für andere Zwecke nicht mehr zur Verfügung steht. Zudem ist grundsätzlich eine individuelle Abstimmung des Hosts auf den jeweiligen Speicherdatenträger erforderlich.

Aus dem "Handbuch für Chipkarten", W. Rankl, W. Effing, 4. Auflage, Hanser Verlag, München, sind Funktionsweise und Anwendung von Smartcard-ICs entnehmbar. Unter anderem sind darin Techniken der Datenübertragung zu einem Smartcard-IC und Verfahren zur Speicherverwaltung beschrieben.

Es ist Aufgabe der Erfindung, ein Verfahren zur Kommunikation zwischen einem Terminal und einem tragbaren Speicherdatenträger mit einer Haupt- und wenigstens einer Zusatzfunktion anzugeben, das es erlaubt, wahlweise die Haupt- oder die Zusatzfunktion des tragbaren Datenträgers anzusprechen, ohne daß dazu jeweils spezielle Treiber entwickelt und eingerichtet werden müssen. Es ist weiter Aufgabe der Erfindung einen zur Ausführung des Verfahrens geeigneten tragbaren Speicherdatenträger sowie ein entsprechendes Terminal anzugeben.

Die Aufgabe wird gelöst durch ein Verfahren mit den Merkmalen des Hauptanspruchs. Sie wird weiterhin gelöst durch einen tragbaren Speicherdatenträger gemäß dem unabhängigen Anspruch 24 sowie ein Terminal gemäß dem unabhängigen Anspruch 36.

### [weiter mit ursprünglicher Seite 4]

Das erfindungsgemäße Verfahren hat den Vorteil, daß es in Systemen mit ganz unterschiedlichen Speicherdatenträgern einsetzbar ist, ohne daß jeweils neue Treiber bereitgestellt werden müssen. Vielmehr können vorhandene Standardtreiber oder Standardkomponenten genutzt werden. Erreicht wird dies, indem den von einem Terminal an das Zusatzmodul auf einem Datenträger gesandten Daten jeweils eine Leitinformation vorangestellt wird, anhand deren Vorhandenseins der Speicherdatenträger entscheiden kann, ob Daten für das Speicherelement oder das Zusatzmodul bestimmt sind. Die Leitinformation wird von einer Anwendung direkt oder von einem Treiberelement generiert, das einen vorhandenen Standardtreiber ergänzt.

Erfindungsgemäß beinhaltet eine Leitinformation einen für ein Zusatzmodul eindeutigen Bezeichner, der vorzugsweise in Form einer Zeichenkette von vorgegebener Länge vorliegt. In zweckmäßiger Weiterbildung enthält die Leitinformation weitere Informationen über Absender und Bestimmungseinheit von Anwendungsdaten.

Vorteilhaft erfolgen die Zugriffe auf das Speicherelement mittels Standardbefehlen des verwendeten Betriebssystems, insbesondere gängigen Schreib- und Lesebefehlen, Suchkommandos, Identifizierungskommandos etc.

In vorteilhafter Weiterbildung des erfindungsgemäßen Verfahrens erfolgt die Rückübermittlung von Antworten des Zusatzmoduls an das Terminal mit Hilfe einer temporären Arbeitsadresse im Speicherelement, unter der die Antwort im Speicherdatenträger breitgestellt wird.

Ein genereller Vorteil des erfindungsgemäßen Verfahrens besteht darin, daß die zu seiner Realisierung vorzunehmenden Änderungen ohne großen Aufwand durchführbar sind.

Ein erfindungsgemäßer tragbarer Speicherdatenträger kann die Form und Funktionalität eines handelsüblichen portablen Massenspeichermediums aufweisen, wie einer Multimedia Card (MMC), einer SD MemoryCard, eines Micro SD, einer Compact Flash-Karte oder auch eines MemorySticks, bzw. USB-Sticks.

Das Speicherelement kann ein nichtflüchtiger Speicher, beispielsweise ein handelsüblicher Flash-Memory sein, wie er in Massenspeicherkarten verwendet wird. Ebenso liegen andere Speicherelementarten im Rahmen dieser Erfindung, wie RAM oder ROM Speicherelemente oder miniaturisierte Festplatten.

In einer bevorzugten Ausführungsform umfaß das Zusatzmodul bzw. das Sicherheitsmodul einen Smartcard-IC mit separatem Controller. Dieser kann ein handelsüblicher Smartcard-IC oder ein speziell für die erfindungsgemäße Anwendung konstruierter oder angepaßter Chip sein.

Der Controller wertet alle oder Teile der an den Speicherdatenträger gesandten Daten aus und prüft, ob die Daten eine Leitinformation enthalten. Bejahendenfalls leitet der Controller die Daten an das Zusatzmodul. Andernfalls führt er einen üblichen Zugriff auf das Speicherelement aus.

In einer bevorzugten Ausführungsform ist es vorgesehen, einen Zugriff ohne Modifikation der Anwendungsdaten unverändert an das Zusatzmodul weiterzuleiten.

Alternativ kann die Funktion des Controllers auch darin bestehen, an erhaltenen Anwendungsdaten eine bestimmte Prozedur auszuführen und den Zugriff in veränderter Form, beispielsweise über vom Controller generierte Anweisungen, an das Zusatzmodul weiterzugeben. Die auszuführende Prozedur kann von der Art des Zugriffs, insbesondere von einem Zugriffsbefehl selbst oder dessen Parametern abhängig sein, so daß durch unterschiedliche Befehle oder/und Parameter eine Vielzahl von Prozeduren ausgeführt werden kann. Damit können zusatzmodulspezifische Zugriffe erfolgen, ohne daß der Treiber des Endgerätes dafür konfiguriert sein muß, wenn der Controller standard-treiberkonforme Befehle in zusatzmodulspezifische Anweisungen umarbeitet bzw. umsetzt.

In einer bevorzugten Ausführungsform ist das Zusatzmodul ein Sicherheitsmodul, das eine Sicherheitsfunktionalität realisiert. Die aktivierbare Sicherheitsfunktionalität kann dabei das Sichern und/oder Schützen bestimmter Daten in der Datenspeichervorrichtung umfassen. Mittels des Sicherheitsmoduls können aber auch andere sicherheitsrelevante Prozesse ausgeführt getriggert und/oder gesteuert werden.

Unter Bezugnahme auf die Zeichnungen wird ein Ausführungsbeispiel der Erfindung nachfolgend näher erläutert.

Es zeigen
- Fig. 1: ein System bestehend aus einem erfindungsgemäßen Speicherdatenträger und einem Terminal,
- Fig. 2: eine alternative Ausführung eines Terminals für ein System gemäß Fig. 1,
- Fig. 3: ein Ablaufdiagramm zur Funktion des in Fig. 1 gezeigten Systems und
- Fig. 4: ein Ablaufdiagramm zur Funktion eines Systems, das mit einem Terminal gemäß Fig. 2 arbeitet,
- Fig. 5: ein vereinfachtes Ablaufdiagramm zur gleichzeitigen Ausführung zweier Sitzungen,

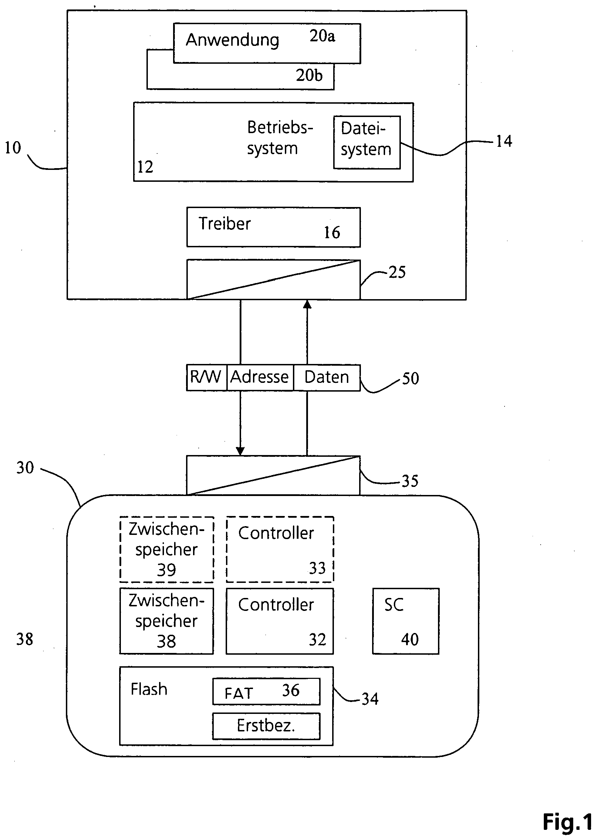

Fig. 1 zeigt ein System bestehend aus einem Terminal 10 und einem tragbaren Speicherdatenträger 30, jeweils mit ihren wesentlichen Komponenten.

Unter "Terminal" wird nachfolgend eine computerbasierte Einrichtung verstanden, die einem Nutzer Soft- und Hardware-Ressourcen bereitstellt, um unterschiedliche, durch Anwendungen 20a, 20b bestimmte Datenverarbeitungsaufgaben auszuführen. Terminals können elektronische Geräte oder Endgeräte aller Art sein, die über eine Schnittstelle für Speicherdatenträger verfügen, wie beispielsweise ein Personal Computer (PC), ein Host für eine Mehrzahl von Nutzern oder insbesondere auch ein mobiles Endgerät, etwa ein Handy oder ein PDA, eine Digitalkamera, ein digitales Audiosystem oder ähnliches sein.

Das Terminal 10 basiert auf einem üblichen Computer, dessen typische Bestandteile, soweit nicht für die Beschreibung nicht erforderlich, auch nicht weiter dargestellt sind. Es besitzt ein Betriebssystem 12 zur Ausführung aller grundlegenden Terminalfunktionen, ein dem Betriebssystem 12 zugeordnetes Dateisystem (*Filesystem*) 14, einen Treiber 16 zur Steuerung eines Datenaustausches mit einem externen Gerät sowie eine elektromechanische Schnittstelle 25 zur Herstellung einer physischen Datenaustauschverbindung mit einem externen Gerät. Das Terminal dient zur Ausführung verschiedener Anwendungen 20a, 20b, die in Softwareform in einem Speicher des Terminals 10 hinterlegt sind.

Unter einem tragbaren "Speicherdatenträger" wird im folgenden grundsätzlich eine computerbasierte Einrichtung verstanden, die in einem tragbaren, geometrisch kleinen Gehäuse untergebracht ist, so daß sie von einem Nutzer bequem mitgeführt werden kann, keine oder eine nur reduziert ausgebildete Mensch-Maschine-Schnittstelle aufweist, und die einem Nutzer entsprechend ihrer Baugröße beschränkte Soft- und Hardware-Ressourcen zur Verfügung stellt, um einen begrenzten Satz von Datenverarbeitungsaufgaben ausführen zu können. Typische Bauformen für einen tragbaren Speicherdatenträger sind eine Smartcard, ein USB-Token, eine Multimedia Card (MMC), eine Secure Digital Memory Card (SD Card) oder ein Memory Stick.

Der tragbare Speicherdatenträger 30 besitzt ebenfalls die Grundstruktur eines üblichen Computers mit den dafür typischen Elementen, die ebenfalls, soweit nicht erforderlich, nicht weiter erläutert sind, weist aber keine oder eine allenfalls reduziert ausgebildete ausgeführte Mensch-Maschine-Schnittstelle auf, beispielsweise in Form einer Leuchtdiode. In der Regel ist der Speicherdatenträger 30 in einer geometrisch so kleinen Bauform ausgeführt, daß die geringe Baugröße Leistungsfähigkeit und Ressourcen beschränkt.

Der tragbare Speicherdatenträger 30 weist erfindungsgemäß eine Haupt - und eine oder mehrere Zusatzfunktionen auf. Die Hauptfunktion besteht in der Fähigkeit zur Verwaltung eines Speicherelementes 34 unter Verwendung eines auf das Speicherelement 34 abgestimmten Übertragungsprotokolles. Die Hauptfunktion legt das Übertragungsprotokoll fest, gemäß dem das Terminal 10 mit dem tragbaren Speicherdatenträger 30 kommuniziert. Die Implementierung der Hauptfunktion kann auf die Einrichtung zur Ausführung des Übertragungsprotokolles beschränkt sein; die eigentliche Funktion, d.h. insbesondere eine Speicherfunktionalität, muß nicht notwendigerweise tatsächlich implementiert sein. Die Zusatzfunktion kann zum Beispiel in einer Signaturfunktion oder in einer Authentisierungsfunktion bestehen. Sie wird von einem Zusatzmodul 40 bereitgestellt, das unabhängig von der Hauptfunktion arbeitet. Das Zusatzmodul 40 kann dabei als reine Softwarekomponente, als Hardwarekomponente oder als Kombination von beidem realisiert sein.

Hauptkomponenten des im folgenden im Hinblick auf seine bestimmungsgemäße Hauptfunktion "Speichervorrichtung" genannten tragbaren Speicherdatenträgers 30 sind ein Controller 32 zur Steuerung der Speicherfunktion und des Datenaustausches mit einem Terminal 10, ein optionaler weiterer Controller 33 für Spezialaufgaben, ein Speichersystem bestehend aus einem wiederbeschreibbaren Speicherelement 34 zur nichtflüchtigen Aufnahme von Daten und einem dem Controller 32 zugeordneten, vorzugsweise als RAM realisierten Zwischenspeicher 38 zur vorübergehenden Aufnahme von Daten, ein Zusatzmodul 40 zur Ausführung einer oder mehrerer Zusatzfunktion sowie eine zu der Schnittstelle 25 des Terminals 10 korrespondierende Gegenschnittstelle 35 zur Herstellung einer physischen Verbindung zum Datenaustausch mit einem Terminal 10.

Anstelle eines einzelnen kann eine Speichervorrichtung 30 auch mehrere Zusatzmodule 40 aufweisen. Diese können dauerhaft oder zur Bereitstellung bestimmter Zusatzfunktionen zusammenwirken. Neben dem Controller 32 kann ferner optional ein Nebencontroller 33 vorgesehen sein, der über einen eigenen Zwischenspeicher 39 verfügt. Der Nebencontroller 33 ist strukturell wie der Controller 32 aufgebaut und führt typischerweise bestimmte Spezialfunktionen aus. Der Nebencontroller 33 kann insbesondere dem Controller 32 vorgeschaltet sein und die Kommunikation mit dem Zusatzmodul 40 übernehmen. In dieser Konstellation kann die Verwaltung des Speicherelementes 34 durch einen gängigen Standardcontroller erfolgen. Schreib-/Lesebefehle für das Speicherelement 34 werden dann von dem Terminal 10 über den Nebencontroller 33 an den Controller 32 bzw. vom Controller 32 über den Nebencontroller 33 an das Terminal 10 weitergereicht. Im folgenden wird jedoch, soweit nicht ausdrücklich anders erläutert, stets davon ausgegangen, daß nur ein Controller 32 vorhanden ist.

Die Verwaltung des Speichersystems des Datenspeicherträgers 30 erfolgt unter Verwendung eines Speicherbelegungsverzeichnisses 36, wie es insbesondere als FAT (*file allocation table*) bekannt ist. Zweckmäßig befindet sich das Speicherbelegungsverzeichnis 36 im Speicherelement 34; ohne weiteres kann es aber auch an einer anderen Stelle im Speichersystem der Speichervorrichtung 30 angelegt sein; unter anderem im ROM, in welchem Fall es unveränderbar ist.

Die Schnittstelle 25, 35 ist typischerweise vom kontaktbehafteten Typ, kann aber auch als kontaktos arbeitende Schnittstelle ausgebildet sein. Sie kann beispielsweise eine universelle Standardschnittstelle, etwa eine USB- Schnittstelle, oder eine auf einen bestimmten Typ von Speichervorrichtung 30 abgestimmte Schnittstelle, etwa eine Multimedia Card (MMC)-, Secure Digital Memory Card (SD Card)- oder Memory Stick- Schnittstelle sein. Zur Durchführung eines Datenaustausches über die Schnittstelle 25, 35 wird ein geeignetes, auf das Speicherelement 34 abgestimmtes Übertragungsprotokoll eingesetzt, das in der Regel deutlich verschieden ist von einem zur Kommunikation mit einem Zusatzmodul 40 geeigneten, spezifischen Protokoll

Das Betriebssystem 12 des Terminals 10 ist ein für computerbasierte Endgeräte verbreitetes Betriebssystem wie Symbian, Windows, Linux oder eine Java-Plattform. Es führt eine oder mehrere Anwendungen 20a, 20b aus, die in Form von Software in dem Terminal 10 gespeichert sind. Die Anwendungen 20a, 20b realisieren Nutzfunktionen, die Zugriffe auf das Speicherelement 34 einer Speichervorrichtung 30 umfassen können. Die Anwendungen 20a, 20b können desweiteren Zugriffe auf das Zusatzmodul 40 einer Speichervorrichtung 30 vorsehen. Bei ihrer Ausführung nutzen die Anwendungen 20a, 20b vom Betriebssystem 12 bereitgestellte System- oder Standardfunktionen, um z.B. auf ein Dateisystem 14 und über dieses auf Dateien in einem Peripheriegerät, insbesondere einer Speichervorrichtung 30, zuzugreifen. Zur Ergänzung der vorhandenen Standardfunktionen kann eine Anwendung 20a, 20b besondere Hilfsfunktionen für die Ausführung von Zugriffen auf das Zusatzmodul 40 zur Bearbeitung des im Rahmen solcher Zugriffe entstehenden Datenaustausches bereitstellen, wie z.B. spezialisierte Treiberelemente zur Ergänzung eines vorhandenen Treibers.

Das Dateisystem 14 fungiert als Teil des Betriebssystems 12 und ist diesem, wie in Fig. 1 angedeutet, unmittelbar zugeordnet. Es verwaltet die Speichersysteme des Terminals 10 und der angeschlossenen Peripheriegeräte, insbesondere einer Speichervorrichtung 30. Zugriffe auf das Dateisystem 14 erfolgen anhand eines logischen Dateibezeichners mittels standardisierter Zugriffsbefehle wie Öffnen (OPEN), Schreiben (*WRITE*) oder Lesen (READ). Ein jeweiliger über das Betriebssystem 12 zugeführte Zugriffsbefehl wird von dem Dateisystem 14 mittels geeigneter Treiber in einen physikalischen Zugriff auf das von dem Dateisystem 14 verwaltete Speichersystem umgesetzt. Das Dateisystem 14 verwaltet dabei gegenüber dem Betriebssystem 12 auch die Speicherbelegung des Speicherelementes 34 der Speichervorrichtung 30. Zugriffe darauf erfolgen mit denselben standardisierten Zugriffsbefehlen, mit denen Zugriffe auf das terminalinterne Speichersystem erfolgen. Zur Verwaltung von Zugriffen auf ein Speicherelement 34 einer Speichervorrichtung benutzt das Dateisystem 14 das Speicherbelegungsverzeichnis 36, das hierzu vom Dateisystem 14 ausgelesen wird.

Zur Ausführung eines vom Betriebssystem 12 übermittelten logischen Zugriffsbefehls auf ein Speicherelement 34 benutzt das Dateisystem 14 einen Treiber 16. Dieser setzt transparente Zugriffsbefehle in für den Controller 32 der Speichereinrichtung 30 interpretierbare Befehle um. Die Befehle beinhalten grundsätzlich eine Adresse des Speicherelementes 34 sowie eine Angabe, ob es der Befehl ein Schreib- oder ein Lesebefehl ist. Die einem Befehl zugeordneten Daten werden in Datenblöcken 50 übermittelt. Der Treiber 16 ist ein auf die Beschaffenheit der Schnittstelle 25, 35 und den Typ der Speichervorrichtung 30 abgestimmter Standardtreiber. Zweckmäßig ist er intern in Form einer hierarchisch strukturierten Treiberkette ausgebildet, in der unter einem Haupttreiber spezialisierte Treiberelemente angeordnet sind, die nach Bedarf aktiviert werden. Die spezialisierten Treiberelemente können von der Anwendung 20a, 20b bereitgestellt und nachträglich in eine bestehende interne Treiberstruktur eingefügt werden, um diese zu ergänzen. Der Treiber 16 ist beispielsweise als üblicher Flash Card Treiber ausgeführt, wenn die Speichervorrichtung 30 vom Flash Card Typ ist. Ein spezialisiertes, von einer Anwendung bereitgestelltes Treiberelement kann insbesondere dazu dienen, in an das Zusatzmodul 40 zu übertragende Anwendungsdaten eine Leitinformation einzufügen. Der Treiber 16 wird nachfolgend als Teil des Dateisystems 14 angesehen und zusammenfassend nur noch als Dateisystem 14 bezeichnet.

Der Controller 32 der Speichervorrichtung 30 setzt die über die Schnittstelle 35 eingehenden Zugriffsbefehle in entsprechende Zugriffe auf das Speicherelement 34 um. Zur Vorbereitung der Zugriffsbefehle im Terminal 10 übermittelt er dem Dateisystem 14 dazu das Speicherbelegungsverzeichnis 36. Der Controller 32 fungiert desweiteren gegenüber dem Zusatzmodul 40 als Schreib-/Lesegerät und kommuniziert mit diesem über ein spezifisches Protokoll. Mittels einer hierzu vorzugsweise als Programm eingerichteten Auswerteeinheit wertet er über die Schnittstelle 35 eingehende Datenblöcke daraufhin aus, ob sie für das Zusatzmodul 40 bestimmt sind. Hierfür ist in dem Speichersystem der Speichereinrichtung 30 ein eindeutiger Erstbezeichner hinterlegt, anhand dessen der Controller 32 eingehende Datenblöcke auswertet. Sind Datenblöcke für das Zusatzmodul 40 bestimmt, leitet der Controller 32 die in den Datenblöcken enthaltenen Anwendungsdaten über eine zu diesem Zweck vorgesehene Umschalteinheit entweder direkt an das Zusatzmodul 40 weiter oder generiert nach Art eines Lese-/Schreibgerätes zu den eingegangenen Anwendungsdaten zunächst eigene Daten und leitet diese dann an das Zusatzmodul 40 weiter oder führt, wenn die Anwendungsdaten Befehle für den Controller in seiner Funktion als Lese-/Schreibgerät sind, etwa das Kommando GET STATUS, diese aus. Der Controller 32 steuert weiterhin den Datenaustausch in umgekehrter Richtung und übermittelt Antwortdaten des Zusatzmoduls 40 zurück an das Terminal 10 oder speichert diese zunächst solange, bis das Terminal 10 die Antwortdaten nachfragt. Der Zwischenspeicher 38 dient zum Sammeln von Befehlen, die in mehreren Datenblöcken übertragen werden. Desweiteren dient er zum Zwischenspeichern von Antworten des Zusatzmoduls 40.

Der Controller 32 überwacht ferner den Datenaustausch zum Terminal 10 und mit dem Zusatzmodul 40 auf formale Richtigkeit und Plausibilität. Beispielsweise prüft er, ob Schreib- und Lesezugriffe auf das Zusatzmodul 40 jeweils vollständig ausgeführt werden.

Zweckmäßig überwacht der Controller 32 generell die einwandfreie Funktion des Zusatzmoduls 40 und signalisiert dem Terminal 10 Fehler oder undefinierte Zustände. Die Signalisierung kann erfolgen, indem der Controller 32 dem Betriebssystem 12 regelmäßig ein Gutsignal sendet, dessen Ausbleiben dem Betriebssystem 12 gegebenenfalls einen undefinierten Zustand bzw. einen Fehler anzeigt; oder der Controller 32 bewertet unmittelbar den Zustand des Zusatzmoduls 40 und übermittelt dem Terminal 10 gegebenenfalls Fehlermeldungen.

Das Zusatzmodul 40 ist typischerweise nach Art eines Chipkarten-ICs ausgeführt, d. h. es ist logisch und physisch besonders manipulationssicher, in seinen Ressourcen beschränkt und führt typischerweise eine gegen Angriffe sensible, sicherheitskritische Funktion aus, etwa die Erstellung einer Signatur über zugesandte Daten. Vorzugsweise ist das Zusatzmodul 40 eine separate Baueinheit und besitzt einen unabhängigen Controller. Denkbar ist aber auch, das Zusatzmodul 40 als funktional selbständigen Bestandteil des Controllers 32 oder zusammen mit diesem als gemeinsames Bauelement auszuführen. Zugriffe auf das Zusatzmodul 40 erfolgen unter Verwendung eines spezifischen Protokolls, das von dem Controller 32 realisiert wird.

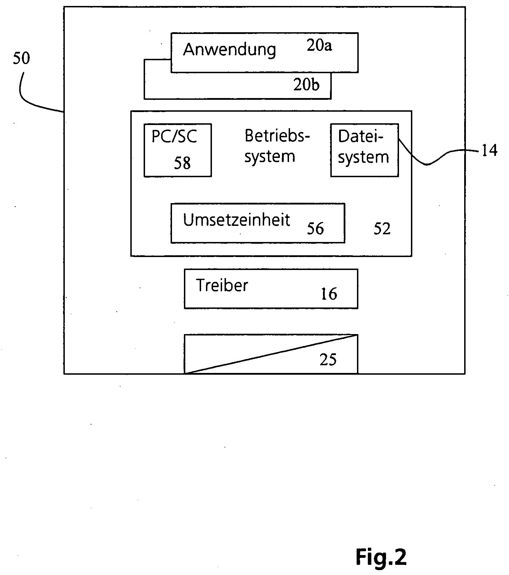

Fig. 2 zeigt eine Variante eines Terminals. Übereinstimmend mit dem zuvor beschriebenen besitzt das in Fig. 2 gezeigte Terminal 50 ein Betriebssystem 12, ein Dateisystem 14, eine oder mehrere auszuführende Anwendungen 20a, 20b sowie eine Schnittstelle 25. Im Unterschied zu dem Terminal nach Fig. 1 führt das Terminal 50 Anwendungen 20a, 20b aus, die nicht für einen unmittelbaren Datenaustausch mit einem Zusatzmodul 40 bzw. für ein Betriebssystem 12, das unmittelbar die Funktionalität des Zusatzmoduls 40 unterstützt, konzipiert sind. Um den Datenaustausch von und zum Terminal 50 auf das zur Kommunikation mit einem Zusatzmodul 40 erforderliche Format umzusetzen, besitzt das Betriebssystem 12 des Terminals 50 eine auf die Funktionalität des Zusatzmoduls 40 abgestimmte logische Schnittstelle 58, beispielsweise eine standardisierte Schnittstelle gemäß der PC/SC (*personal computer*/*smart card*)-Spezifikation, die Hilfsfunktionen bereitstellt, etwa zur Authentisierung, zur Herstellung der Verbindung oder zur Verwaltung mehrerer Zusatzmodule 40, die den von der Anwendung 20a, 20b generierten Datenaustausch im Format eines Standardcomputers in das für Chipkarten vorgegebene ISO-Format umsetzt. Die logische Schnittstelle 58 ermöglicht es terminalunabhängige Anwendungen 20a, 20b auszuführen, die nicht an ein bestimmtes Betriebssystem 12 oder ein bestimmtes Zusatzmodul 40 gebunden sind. Der logischen Schnittstelle 58 ist eine Umsetzeinheit 56 zugeordnet, die den an der logischen Schnittstelle 58 anfallenden Datenaustausch in das auf das Speicherelement 34 abgestimmte Übertragungsprotokoll überträgt. Die Umsetzeinheit 56 kann insbesondere ein sogenanntes IFD-Handler (*Interface Decvic-Handler*) sein, das die vom Betriebssystem 12 bereitgestellten Standardfunktionen für das Dateisystem 14 nutzt.

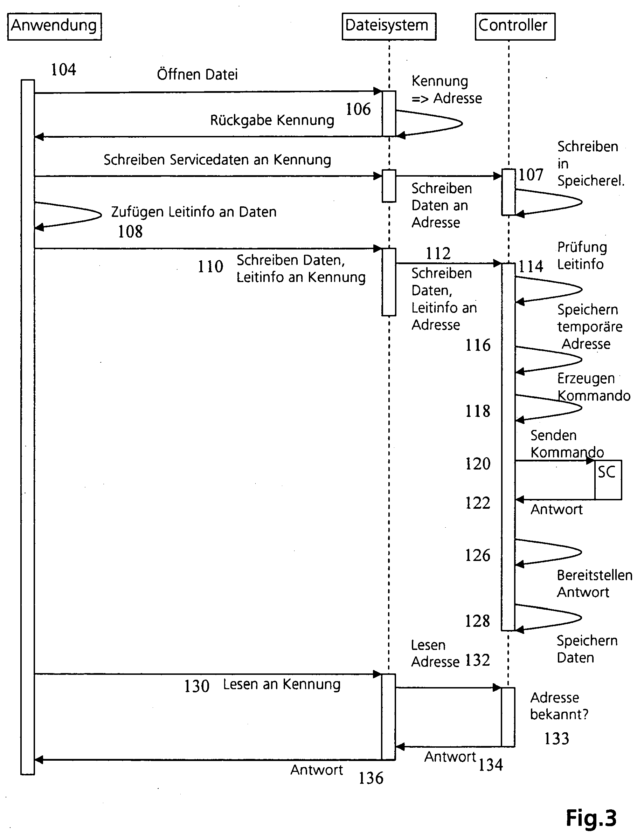

Fig. 3 veranschaulicht anhand des entstehenden Datenflusses das Zusammenspiel zwischen einem Terminal 10 und einer Speichervorrichtung 30 bei der Ausführung einer Anwendung 20a, 20b, die einen Zugriff auf das Zusatzmodul 40 beinhaltet.

Der dargestellte Ablauf setzt an einer Stelle ein, an der im Rahmen der Ausführung der Anwendung 20a, 20b ein Zugriff auf das Zusatzmodul 40 ausgeführt werden soll. Der Zugriff auf das Zusatzmodul 40 kann ein Schreib- oder ein Lesezugriff sein oder auch darin bestehen, eine bestimmte Funktion des Zusatzmoduls 40 auszulösen, wie zum Beispiel die Übermittlung von Ergebnisdaten aus früher ausgelösten Funktionen, oder das Zusatzmodul 40 in einen bestimmten Zustand zu setzen. Der Zugriff kann, wie im folgenden stets angenommen, durch eine Anwendung 20 aber auch z.B. durch einen Treiber oder in sonstiger Weise durch das Betriebssystem 12 des Terminals 10 bewirkt sein. Nachfolgend wird exemplarisch davon ausgegangen, daß in einem Schreibzugriff Anwendungsdaten an das Zusatzmodul 40 übermittelt werden sollen. Bei den Anwendungsdaten kann es sich zum Beispiel um APDUs für einen Smartcard-IC handeln.

Um den Zugriff auf das Zusatzmodul 40 auszuführen veranlaßt die Anwendung 20a, 20b das Dateisystem 14 über den zugeordneten Treiber zunächst dazu, Schritt 104, auf der Datenspeichervorrichtung 30 eine Datei mit einem mitgelieferten, eindeutigen Dateinamen zu öffnen. Das Dateisystem 14 richtet darauf in dem zur Verfügung stehenden Adreßraum des Speicherelementes 34 der Speichervorrichtung 30 einen Bereich für die Datei ein und gibt für nachfolgende Zugriffe auf die Datei eine Kennung (*handle*) an die Anwendung 20a, 20b zurück, Schritt 106. Zur Durchführung dieses Schrittes bedient sie sich des zu diesem Zweck zuvor von der Speichervorrichtung 30 angeforderten Dateibelegungsverzeichnisses 36, in das sie die neue Datei einträgt.

Es kann vorgesehen sein, daß das Einrichten von Dateien nur bestimmten Anwendungen 20 und/oder nur für bestimmte Funktionen gestattet ist; in diesem Fall erfolgt zunächst eine Prüfung, ob die zugreifende Anwendung zu dem Zugriff berechtigt ist. Es kann ferner vorgesehen sein, daß Zugriffe auf bestimmte Dateien nur bestimmten Anwendungen 20 gestattet sind, dies wird ebenfalls vom Dateisystem 14 vor Ausführung eines Zugriffs geprüft.

Nachfolgend kann vorgesehen sein, daß das Dateisystem 14 über den Controller 32 zunächst einen Standard-Schreibzugriff auf das Speicherelement 34 auf die zuvor erzeugte Datei ausführt und Servicedaten in die Datei schreibt, Schritt 107. Bei diesen Servicedaten kann es sich z.B. um Fehlermeldungen handeln, die später gegebenenfalls an das Betriebssystem 14 zurückgegeben werden, wenn während eines Zugriffs ein Fehler oder ein undefinierter Zustand auftritt und der Controller eine von der Anwendung eingeforderte Antwort des Zusatzmoduls 40 nicht liefern kann. Der Schritt kann auch zu einem früheren Zeitpunkt ausgeführt werden, insbesondere auch bereits bevor die Programmausführung der Anwendung 20 an den Zugriff auf das Zusatzmodul 40 kommt.

Sodann werden die im Rahmen des Zugriffs auf das Zusatzmodul 40 zu übertragenden Anwendungsdaten für die Übertragung aufbereitet, Schritt 108. Zum einen erfolgt dabei eine Anpassung der Anwendungsdaten an das zur Übertragung über die Schnittstelle 25, 35 verwendete, auf das Speicherelement 34 abgestimmte Übertragungsprotokoll. Dieses transportiert zu übertragende Daten in Datenblöcken von definierter Größe. Sofern die Menge der zu übertragenden Anwendungsdaten größer ist als die Größe eines Datenblocks in dem zugrundeliegenden Übertragungsprotokoll, werden die zu übertragenden Anwendungsdaten in mehrere Teildatenblöcke entsprechend der durch das Übertragungsprotokoll vorgegebenen Blockgröße geteilt.

Desweiteren wird zu den Anwendungsdaten eine besondere Leitinformation gebildet. Diese enthält einen eindeutigen Bezeichner sowie eine Angabe zum Absender und zur Bestimmungseinheit für die Anwendungsdaten. Der Bezeichner ist eine Zeichenkette mit vorzugsweise fest vorgegebener Größe von zum Beispiel 8 oder 16 Byte. Vorzugsweise ist er einem Zusatzmodul 40 zugeordnet. Der Bezeichner kann von dem Controller 32 erkannt werden. Vorzugsweise steht er dazu dem Controller 32 in identischer Weise zur Verfügung. Dabei wurde er entweder während der Sitzung zu einem früheren Zeitpunkt vorab übermittelt oder ist statisch als Erstbezeichner in der Speichervorrichtung 30 gespeichert und steht dem Controller 32 ständig zur Verfügung. Vorzugsweise wird zumindest ein Erstbezeichner in gleicher Weise einer bestimmten Art von Speichervorrichtungen 30 zugeordnet und jeweils in deren Speichersystem hinterlegt. Obgleich im folgenden zur Erleichterung der Beschreibung stets von symmetrischen, identisch übereinstimmenden Bezeichnern in Leitinformation und Controller ausgegangen wird, können der in der Leitinformation verwendete und der dem Controller 32 zur Verfügung stehende Bezeichner auch nach Art eines asymmetrischen Schlüsselpaares konstruiert sein. Sie sind dann nicht übereinstimmend, sondern ihre Übereinstimmung muß durch Anwendung einer mathematischen Operation festgestellt werden.

Zweckmäßig ist vorgesehen, daß während eines Datenaustauschs zwischen einem Terminal 10 und einer Speichervorrichtung 30 wenigstens ein oder mehrere weitere Bezeichner dynamisch erzeugt werden. Die dynamische Erzeugung erfolgt zweckmäßig basierend auf der Ausführung kryptographischer Operationen, etwa der Bildung von Zufallszahlen oder der Erzeugung einer Signatur über Anwendungsdaten. Ein erster weiterer Bezeichner wird zweckmäßig regelmäßig dynamisch erzeugt, sobald der Controller 32 das Vorliegen eines Erstbezeichners festgestellt hat. Die dynamische Bildung weiterer zusätzlicher Bezeichner wird etwa mittels dafür bereitgestellter Zuordnungsbefehle ausgelöst. Die Erzeugung der zusätzlichen Bezeichner kann durch den Controller 32 erfolgen, der sie anschließend dem Betriebssystem 12 mitteilt. Alternativ kann das Betriebssystem 12 einen zusätzlichen Bezeichner bereitstellen oder es können Betriebssystem 12 und Controller 32 jeweils Teile eines zusätzlichen Bezeichners bereitstellen. Vorgesehen sein kann weiter, den fest einer Art von Speichervorrichtungen 30 zugeordneten Erstbezeichner in größeren Abständen zu ändern.

Zusätzlich wird in der Leitinformation oder in dem Bezeichner zweckmäßig eine Angabe zu Absender und/oder Bestimmungseinheit kodiert. Dies kann beispielsweise in einem Byte erfolgen, in dem etwa der Wert "0" für eine Datenübertragung von einem Terminal 10 zu einem Controller 32 steht, eine "1" für eine Datenübertragung von einem Terminal 10 zu einem Zusatzmodul 40, eine "2" für eine Datenübertragung von einem Controller 32 zu einem Terminal 10 und eine "3" für eine Datenübertragung von einem Zusatzmodul 40 zu einem Terminal 10. In der Leitinformation können daneben weitere Informationen enthalten sein, etwa Zähler zur Absicherung von Zugriffen oder zur Deklaration von Anwendungsdaten als Parameter..

Die Leitinformation wird mit den zu übertragenden Anwendungsdaten zu einem Datenzug verbunden, der in einen Datenblock eingebettet wird. Müssen die Anwendungsdaten in Teildatenblöcke geteilt werden, wird jeder Teildatenblock mit einer Leitinformation zu einem Datenzug verbunden. Die resultierenden Datenzüge werden jeweils in einen übertragungsprotokollgemäßen Datenblock eingebettet. Die Anwendungsdaten liegen schließlich eingebettet in einen oder mehrere Datenblöcke gemäß dem auf das Speicherelement 34 abgestimmten Übertragungsprotokoll vor.

Die Datenblöcke werden anschießend zusammen mit der Kennung als Befehl zum Schreiben an das Dateisystem 14 übergeben, Schritt 110. Dieses setzt den Schreibbefehl um in einen für den Controller 32 der Speichervorrichtung 30 ausführbaren Schreibbefehl. Hierzu bestimmt es die zu der Kennung gehörende Adresse im Speichersystem der Speichervorrichtung 30. Die umgesetzten Daten und die Adresse werden zusammen mit der Angabe, daß der Befehl ein Schreibbefehl ist, über den Treiber 16 an den Controller 32 übermittelt, Schritt 112.

Der Controller 32 prüft alle oder bestimmte zugegangene Datenblock darauf, ob er eine Leitinformation enthält, Schritt 114. Hierzu prüft der Controller 32, ob der Datenblock einen dem Controller 32 bekannten Bezeichner enthält. Enthält ein Datenblock danach keine Leitinformation, sieht ihn der Controller 32 als Standardzugriff auf das Speicherelement 34 an und führt ihn an der übermittelten Adresse entsprechend aus.

Enthält ein Datenblock dagegen eine Leitinformation, d.h. enthält der Datenblock z.B. einen auch in der Speichervorrichtung 30 gespeicherten Erstbezeichner, speichert der Controller 32 die mit dem Datenblock übermittelte Adresse als temporäre Arbeitsadresse im Zwischenspeicher 38 zur weiteren Verwendung, Schritt 116.

Zweckmäßig erzeugt der Controller 32 nach Erkennen eines Erstbezeichners unmittelbar dynamisch einen weiteren Bezeichner und teilt diesen der Anwendung 20a, 20b bzw. dem Betriebssystem 12 mit. Der weitere Bezeichner wird anschließend für den weiteren Datenaustausch bis zu dessen Beendigung verwendet.

Der Controller 32 bearbeitet den zugegangenen Datenblock nun, um die darin enthaltenen Anwendungsdaten an das Zusatzmodul 40 weiterzuleiten, oder, sofern es sich um Befehle an den Controller 32 in seiner Eigenschaft als Schreib-/Lesegerät handelt, diese auszuführen. Hierzu entfernt er aus jedem Datenblock die Leitinformation, prüft, ob die danach vorliegenden Daten bereits vollständige Anwendungsdaten bilden, sammelt, sofern dies nicht der Fall ist, die nach Entfernung der Leitinformation verbleibenden Daten zunächst in einem Zwischenspeicher, bis die Anwendungsdaten vollständig vorliegen, und bildet dann, sofern die Anwendungsdaten direkt für das Zusatzmodul 40 bestimmt sind, ein Kommando, Schritt 118, das durch das Zusatzmodul 40 ausführbar ist. Bilden die Anwendungsdaten einen Befehl, etwa den Befehl RESET, der direkt an den Controller 32 in seiner Eigenschaft als Lese-/Schreibgerät für das Zusatzmodul 40 gerichtet ist, führt der Controller 32 ihn aus. Vor Bildung des Kommandos für das Zusatzmodul 40 werden die Anwendungsdaten zweckmäßig einer Sicherheitsprüfung unterzogen, in der etwa Plausibilität und Konsistenz überprüft werden. Beispielsweise wird geprüft, ob das Zusatzmodul 40 bereits aktiviert ist.

In einer zweckmäßigen Variante zur Auswertung der Leitinformation kann vorgesehen sein, daß der Controller 32 den Bezeichner selbst als Befehl auffaßt und ihn anschließend ausführt. Vorzugsweise wird in diesem Fall ein Satz von mehreren Erstbezeichnern bereitgestellt, welche jeweils einem anderen Befehl entsprechen oder eine andere Aktion des Controllers 32 veranlassen.

Die mit einem oder mehreren Datenblöcken übertragenen Daten können Zusatzdaten, etwa Parameter zur Einstellung des Datenaustauschs zwischen Terminal 10 und Controller 32 oder zwischen Controller 32 und Zusatzmodul 40 enthalten, die nicht zur unmittelbaren Weitergabe an das Zusatzmodul 40 bestimmt sind. Die Unterscheidung der Zusatzdaten von anderen Anwendungsdaten erfolgt zweckmäßig anhand einer entsprechenden Information in der Leitinformation. Die Zusatzdaten legt der Controller 32 im Rahmen eines Standardzugriffs in dem Speicherelement 34 ab.

Vorgesehen sein kann, daß der Controller 32 weitere Daten in ein aus erhaltenen Daten gebildetes Kommando einbindet, die er z.B. von einer definierten Adresse in dem Speicherelement 34 ausliest. Die Daten können insbesondere Anwendungsdaten, Funktionsaufrufe, Parameterinformationen, Einstellungen oder Ergebnisse vorhergehender Aufrufe von Funktionen des Zusatzmoduls 40 sein. Sie wurden zu einem früheren Zeitpunkt von einer Anwendung 20 oder einer Funktion des Betriebssytems 12 über das Terminal 10 oder von dem Zusatzmodul 40 an der definierten Adresse abgelegt.

Das ggf. um weitere Daten ergänzte Kommando schickt der Controller 32 an das Zusatzmodul 40, Schritt 120. Dieses führt das Kommando aus und erzeugt eine Antwort, die es an den Controller 32 zurückschickt, Schritt 122.

Die Antwort wird vom Controller 32 in eine zur Zurücksendung an das Terminal 10 geeignete Form umgesetzt, Schritt 126. Hierbei kann insbesondere wiederum eine Aufteilung der Antwort in mehrere Teildatenblöcke vorgesehen sein, wenn die Größe der Antwort die Größe des im Rahmen des Übertragungsprotokolls zulässigen Datenblockes übersteigt. Die Antwort versieht der Controller 32 mit der gespeicherten temporären Adresse und speichert sie im Zwischenspeicher 38, Schritt 128. Vorgesehen sein kann alternativ auch, daß die Antwort an bestimmte, dafür reservierte Adressen im Speicherelement 34 gelegt wird.

Um eine Antwort auf zuvor - in Schritt 110 - abgeschickte Anwendungsdaten zu erhalten, sendet das Betriebssystem 12 dem Dateisystem 14 zweckmäßig unter Verwendung der Kennung regelmäßige Lesezugriffe auf die temporäre Arbeitsadresse im Speicherelement 34 der Speichervorrichtung 30, Schritt 130. Die Lesezugriffe werden von dem Dateisystem 14 umgesetzt und an den Controller 32 der Speichervorrichtung 30 geleitet, Schritt 132. Dieser prüft, ob die in dem Lesezugriff angegebene Adresse eine temporäre Adresse ist, Schritt 133, und ob dazu eine Antwort im Zwischenspeicher 38 bereitgestellt ist. Ist das der Fall, sendet der Controller 32 die im Zwischenspeicher 38 befindliche Antwort des Zusatzmoduls 40 an das Dateisystem 14, welches sie an das Betriebssystem 12 und damit an die ausgeführte Anwendung 20a weitergibt, Schritt 136. Anschließend löscht der Controller 32 die zwischengespeicherte temporäre Arbeitsadresse.

Kommt es im Verlauf eines Zugriffs zu einem Fehler dadurch, daß die temporäre Adresse verlorengeht, stellt der Controller 32 bei der Prüfung der Adresse in Schritt 133 fest, daß dazu keine entsprechende temporäre Adresse existiert. Er wertet den Lesezugriff dann als Standardzugriff auf das Speicherelement 34, führt ihn entsprechend auf die temporäre Adresse aus und liest die dort zuvor - in Schritt 107 - gespeicherte Servicedaten aus. Diese gibt er an das Betriebssystem 12 zurück.

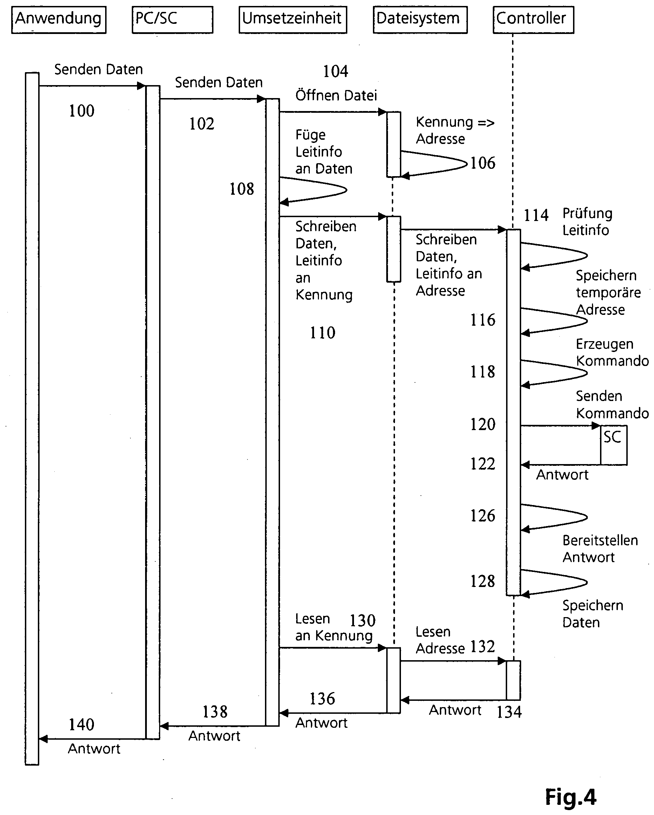

Fig. 4 zeigt einen Ablauf zur Veranschaulichung des Zusammenwirkens zwischen einer Speichervorrichtung 30 und einem alternativen Terminal 50 gemäß Fig. 2. Die ausgeführte Anwendung 20a, 20b ist nun selbst nicht dazu eingerichtet, Zugriffe auf das Dateisystem 14 zu erzeugen. Sie kommuniziert vielmehr über eine Schnittstelle 58, die speziell auf die Kommunikation mit dem Zusatzmodul 40 abgestimmt und unabhängig vom Dateisystem 14 ist. Die Schnittstelle 58 bettet die Anwendungsdaten in ein Protokoll zur Übertragung an das Zusatzmodul 40 ein und schickt sie so an die Umsetzeinheit 56, Schritt 102.

Die Umsetzeinheit 56 erzeugt aus den von der Schnittstelle 58 erhaltenen Anwendungsdaten Zugriffsbefehle an das Dateisystem 14. Hierzu führt sie Schritt 104 aus und veranlaßt das Dateisystem 14 dazu eine Kennung zu einem in dem Speicherelement 34 bereitgestellten Speicherbereich zurückzugeben, Schritt 106. Desweiteren bereitet die Umsetzeinheit 56 die von der Schnittstelle 58 erhaltenen Anwendungsdaten zur Übertragung an die Speichervorrichtung 30 vor. Hierzu teilt sie die Anwendungsdaten wiederum ggf. in mehrere Teildatenblöcke. Weiter erzeugt sie zu den Anwendungsdaten eine Leitinformation. Anwendungsdaten und Leitinformation fügt die Umsetzeinheit 56 zu einem Datenzug zusammen, Schritt 108, der in einen Datenblock des auf das Speicherelement 34 abgestimmten Übertragungsprotokolls eingebettet werden kann. Mußten die Anwendungsdaten in Teildatenblöcke geteilt werden, versieht sie jeden Teildatenblock mit einer Leitinformation. Den oder die danach vorliegenden Datenzüge übermittelt die Umsetzeinheit 56 zusammen mit der Kennung an das Dateisystem 14, Schritt 110, welches sie nach Ermittlung der zu der Kennung gehörenden Adresse über den Treiber 16 an den Controller 32 weiterleitet, Schritt 112. Der Controller 32 führt sodann die Schritte 114 bis 128 wie beschrieben aus.

Zum Erhalt einer Antwort sendet die Umsetzeinheit 56 zweckmäßig regelmäßig ein Lesezugriffssignal an das Dateisystem 14, das den Lesezugriffbefehl umsetzt und an den Controller 32 weiterleitet, Schritt 132. Der Controller 32 prüft, ob unter der mit dem Lesebefehl gelieferten Adresse eine Antwort bereit steht und übermittelt diese ggf., Schritt 134, zurück an das Dateisystem 14, welches sie nach Umsetzung weiterleitet an die Umsetzeinheit 56, Schritt 136.

Der Umsetzeinheit 56 bereitet die Antwort für die Schnittstelle 58 auf und sendet sie an diese. Von der Schnittstelle 58 wird die Antwort schließlich, Schritt 140, an die Anwendung 20a zurückgegeben.

In einer Variante zu den vorstehend anhand der Fig. 3 und 4 geschilderten Abläufen wird für die Übergabe der für das Zusatzmodul 40 bestimmten Anwendungsdaten an das Dateisystem 14 nicht jeder aus den Anwendungsdaten abgeleitete Teildatenblock mit einer Leitinformation versehen, sondern nur der jeweils erste. Nach Erkennen einer Leitinformation im Schritt 114 schaltet der Controller 32 dann in einen sicheren Modus, bis der letzte Teildatenblock eines Satzes von Anwendungsdaten eingegangen ist.

Vorgesehen sein kann weiter, daß auch die von der Speichervorrichtung 30 an das Terminal 10 zurückgesandten Antworten mit einer Leitinformation versehen werden. Dadurch kann z.B. die Fehlersuche unterstützt werden. Die Leitinformation kann dabei anders ausgeführt sein als die beim Senden von Daten an die Speichervorrichtung 30. Beispielsweise kann auf eine Signatur verzichtet werden.

Das Konzept der Leitinformation erlaubt es, zwischen einem Terminal 10 und einer Speichervorrichtung 30 gleichzeitig mehrere, in unabhängigen Sitzungen geführte Datenaustausche zu verwalten, indem das Terminal 10 zusätzlich zu einem bereits laufenden Datenaustausch unter Verwendung einer weiteren Leitinformation einen separaten weiteren Datenaustausch zu einer weiteren Instanz der Speichervorrichtung 30 eröffnet. Die weitere Instanz kann dabei ein einzelnes Zusatzmodul 40 sein, das separate Datenaustausche mit zwei Anwendungen 20a, 20b auf einem Terminal 10 führt oder ein oder mehrere auf einer Speichervorrichtung 30 befindliche weitere Zusatzmodule 40, die mit einer oder mehreren Anwendungen 20 auf einem Terminal 10 in separatem Datenaustausch stehen; ferner kann die weitere Instanz auch ein weiterer Controller 33 sein, der etwa dem Controller 32 vorgeschaltet ist und zum Beispiel dazu dient, bestimmte Zusatzaufgaben wie Protokollkonvertierungen oder Verschlüsselungen auszuführen.

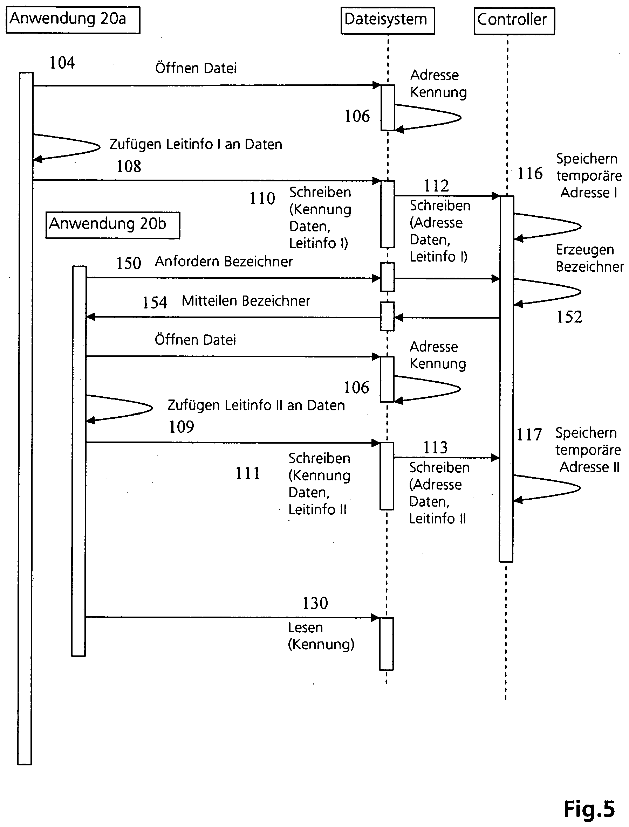

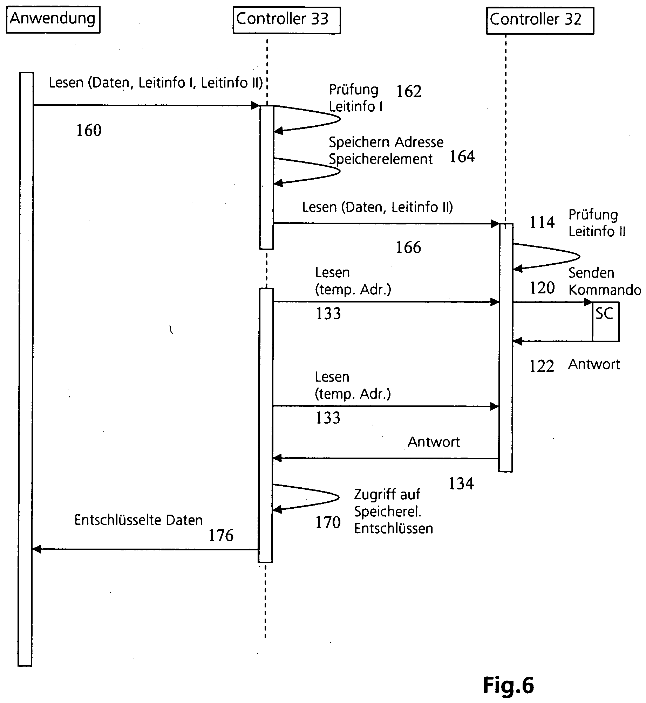

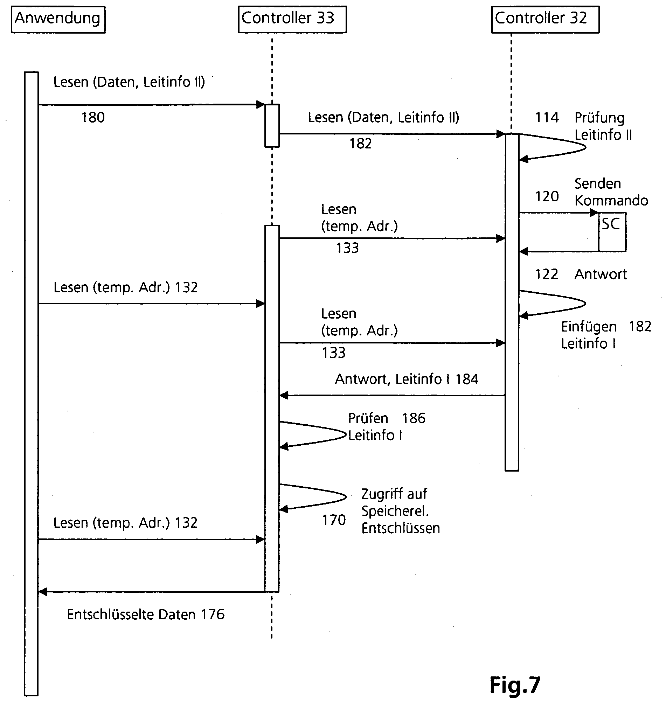

Das Prinzip der Durchführung mehrerer Sitzungen ist in Fig. 5 veranschaulicht. Im Beispiel greifen zwei Anwendungen 20a, 20b unabhängig voneinander auf ein Zusatzmodul 40 zu. Der in Figur 5 gezeigte Ablauf verwendet dieselben Schritte, wie sie in Fig. 3 gezeigten sind; aus Gründen der Übersichtlichkeit sind sie jedoch nur teilweise wiedergegeben. Die beiden Sitzungen werden von dem Controller 32 anhand ihrer jeweiligen Leitinformation unterschieden. Eine erste Sitzung wird dabei durch die Anwendung 20a unter Verwendung des auf der Speichervorrichtung 30 fest hinterlegten Erstbezeichners mit einer Leitinformation I gestartet, Schritt 150. Mit der Leitinformation I wird vom Controller 32 dynamisch die Erzeugung eines weiteren Bezeichners angefordert, Schritt 151,152,154. Mittels des daraufhin erzeugten Bezeichners wird die Leitinformation II gebildet, den die Anwendung 20a im weiteren Verlauf benutzt, Schritt 110,112,116.

Nachfolgend wird eine weitere Sitzung der Anwendung 20b eröffnet, indem der Controller 32 mittels eines entsprechenden Befehls, dem wiederum die Leitinformation I vorangestellt ist, Schritt 160, dynamisch zur Erzeugung eines weiteren Bezeichners aufgefordert wird, Schritt 161. Der Controller 32 erzeugt darauf einen weiteren Bezeichner, Schritt 162 und teilt ihn der Anwendung 20b mit, indem diese ich ausliest, Schritt 164. Mit dem ausgelesenen Bezeichner bildet die Anwendung 20b eine weitere Leitinformation III, welche sie den Anwendungsdaten beifügt, Schritt 109. Nach Übermittlung der Leitinformation III in einem Datenblock an den Controller 32, Schritt 113, speichert dieser die zugehörige Adresse als weitere temporäre Adresse II im Zwischenspeicher, Schritt 117. Nachfolgend ordnet der Controller 32 alle Datenblöcke mit der Leitinformation II der ersten Sitzung und alle Datenblöcke mit der Leitinformation III der zweiten Sitzung zu. Jede Sitzung repräsentiert dabei einen separaten logischen Kanal zwischen einer Anwendung 20a, 20b und dem Zusatzmodul 40. Auf analoge Weise können weitere Sitzungen eröffnet werden. Befehle, die den Controller 32 in seiner Funktion als Lese-/Schreibgerät betreffen, werden mit der Leitinformation I versehen, die den fest hinterlegten Erstbezeichner verwendet.

Vorgesehen sein kann die Zugriffe auf das Zusatzmodul 40 in Klassen aufzuteilen und jede Klasse in einer eigenen Sitzung zu führen. Beispielsweise kann nach Verwaltungs- und Anwendungsfunktionen unterschieden werden. Im Falle eines Fehlers in einer Sitzung kann dann eine andere Sitzung genutzt werden, um z.B. eine fehlerhafte Anwendung zurückzusetzen. Auf analoge Weise können gleichzeitig separate Sitzungen zwischen auf einem Terminal 10 ausgeführten Anwendungen 20 und mehreren, auf derselben Speichervorrichtung 30 ausgebildeten Zusatzmodulen 40 geführt werden.

Ohne den Rahmen der Erfindung zu verlassen können vorstehend beschriebene Verfahren und Gegenstände auf vielfache Art variiert werden. So kann das Terminal 10, 50 Teil eines übergeordneten Gerätes sein oder auf mehrere Geräte verteilt ausgeführt sein. In die Abläufe gemäß den Figuren 3 und 4 können weitere Zwischenschritte eingefügt sein, die beispielsweise der Ausführungsabsicherung dienen. Bestimmte Schritte können andererseits ohne entscheidende Beeinträchtigung der Gesamtfunktion auch entfallen; dies gilt z.B. für die Vorabspeicherung von Servicedaten in Schritt 107 und deren eventuelle Rückgabe im Falle eines Fehlers.

## Patentansprüche

1. Verfahren für den Zugriff auf einen tragbaren Speicherdatenträger mit einem Controller zur Verwaltung eines standardisierten Speicherelementes und einem Zusatzmodul, wobei Anwendungsdaten erstellt werden, die für das Zusatzmodul (40) bestimmt sind und einen Zugriff darauf beinhalten,
- **gekennzeichnet durch** folgende Schritte:
- Erzeugen einer Leitinformation, die einen Bezeichner enthält, der von dem Controller (32) erkannt werden kann,
- Zusammenfügen der Leitinformation und der Anwendungsdaten zu einem Datenzug,
- Einbetten des Datenzuges in mindestens einen Datenblock gemäß einem Übertragungsprotokoll, das für einen Zugriff auf das Speicherelement (34) vorgesehen ist,
- wobei, wenn die Menge der Anwendungsdaten größer ist als ein Datenblock gemäß dem für den Zugriff auf das Speicherelement (34) vorgesehen Übertragungsprotokoll, die Anwendungsdaten in mehrere Teildatenblöcke aufgeteilt werden, jeder Teildatenblock mit einer Leitinformation zu einem Datenzug zusammengefügt und jeder Datenzug in einen Datenblock eingebettet wird, so daß die Anwendungsdaten in diesem Fall in mehreren Datenblöcken vorliegen,
- Zuordnen des bzw. der Datenblöcke zu einem Zugriffsbefehl, der eine Adresse des Speicherelementes (34) sowie eine Angabe des Zugriffs (Öffnen, Schreiben, Lesen) enthält,
- Übertragen des einen bzw. der mehreren Datenblöcke mit dem Zugriffsbefehl an den Speicherdatenträger (30) in dem auf das Speicherelement (34) abgestimmten Übertragungsprotokoll,
- Bestimmen, ob ein auf dem tragbaren Speicherdatenträger (30) eingegangener Datenblock eine Leitinformation enthält,
- Weiterleiten der in einem Datenblock enthaltenen Anwendungsdaten an das Zusatzmodul (40), wenn der Datenblock eine Leitinformation enthält,
- Ausführen des in dem Zugriffsbefehl angegebenen Zugriffes an der übermittelten Adresse in dem Speicherelement (34), wenn der Datenblock keine Leitinformation enthält.

2. Verfahren nach Anspruch 1, **dadurch gekennzeichnet, daß** der Bezeichner eine Zeichenkette mit einer definierten Anzahl von Zeichen ist

3. Verfahren nach Anspruch 1, **dadurch gekennzeichnet, daß** der Bezeichner als Erstbezeichner identisch einer Gruppe von Speicherdatenträgern (30) zugeordnet und jeweils in deren Speichersystem hinterlegt wird.

4. Verfahren nach Anspruch 1, **dadurch gekennzeichnet, daß** für jedes auf einem Speicherdatenträger (30) vorhandenen Zusatzmodul (40) ein eigener Erstbezeichner hinterlegt wird.

5. Verfahren nach Anspruch 1, **dadurch gekennzeichnet, daß** ein Bezeichner während eines Datenaustauschs zwischen einem Terminal (10) und einem Speicherdatenträger (30) dynamisch erzeugt wird.

6. Verfahren nach Anspruch 5, **dadurch gekennzeichnet, daß** ein dynamisch erzeugter Bezeichner für die Dauer eines Datenaustausches zur Kennzeichnung von für das Zusatzmodul (40) bestimmte Anwendungsdaten verwendet wird.

7. Verfahren nach Anspruch 1, **dadurch gekennzeichnet, daß** ein zusätzlicher Bezeichner erzeugt wird, um zusätzlich zu einem bereits laufenden Datenaustausch einen separaten weiteren Datenaustausch zwischen einem Terminal (10) und einem (30) zu eröffnen.

8. Verfahren nach Anspruch 1, **dadurch gekennzeichnet, daß** die Leitinformation eine Angabe über Absender und Bestimmungseinheit der Anwendungsdaten enthält.

9. Verfahren nach Anspruch 1, **dadurch gekennzeichnet, daß** zu übertragenden Anwendungsdaten eine temporäre Arbeitsadresse in der Speicherdatenträger (30) zugeordnet wird, unter der nachfolgend eine Antwort des Zusatzmoduls (40) bereitgestellt wird.

10. Verfahren nach Anspruch 1, **dadurch gekennzeichnet, daß** nach Übertragung von Anwendungsdaten überprüft wird, ob unter der temporären Adresse eine Antwort des Zusatzmoduls (40) vorliegt.

11. Verfahren nach Anspruch 1, **dadurch gekennzeichnet, daß** unter der temporären Adresse Servicedaten in dem Speicherelement (34) abgelegt werden, die ausgegeben werden, wenn bei einer nachfolgenden Prüfung auf Vorliegen einer Antwort die übermittelte temporäre Adresse nicht erkannt werden kann.

12. Verfahren nach Anspruch 1, **dadurch gekennzeichnet, daß** in dem Controller (32) eine Software bereitgestellt wird, die die Analyse von Datenblöcken auf das Vorliegen einer Leitinformation erlaubt.

13. Verfahren nach Anspruch 1, **dadurch gekennzeichnet, daß** die Übertragung der Anwendungsdaten über einen Treiber (16) erfolgt, der zum Austausch von Daten zwischen einem Terminal (10) und einem Speicherelement (34) ausgelegt ist.

14. Verfahren nach Anspruch 1, **dadurch gekennzeichnet, daß** das Weiterleiten von Anwendungsdaten ein Verarbeiten und/oder Umsetzen der Anwendungsdaten in Anweisungen an das Zusatzmodul (40) umfaßt.

15. Tragbarer Speicherdatenträger zur Durchführung des Verfahrens nach Anspruch 1 mit wenigstens einem Zusatzmodul (40) und einem Controller (32) zur Steuerung eines Zugriffs auf ein Speicherelement (34), auf das mittels Datenblöcken gemäß einem auf das Speicherelement (34) abgestimmten Übertragungsprotokoll zugegriffen werden kann,
**dadurch gekennzeichnet, daß** der Controller (32) eine Auswerteeinheit umfaßt, die dazu eingerichtet ist, eingehende Datenblöcke auf Vorliegen einer Leitinformation auszuwerten, wobei der Controller (32) Daten an mindestens ein Zusatzmodul (40) weiterleitet, wenn er festgestellt hat, daß ein Datenblock eine Leitinformation enthält.

16. Tragbarer Speicherdatenträger nach Anspruch 15, **dadurch gekennzeichnet, daß** der Controller (32) eine Umschalteinheit aufweist, die dazu eingerichtet ist, den Zugriff auf das Speicherelement (34) zu bearbeiten und in Anweisungen an das Zuatzmodul (40) umzusetzen.

17. Tragbarer Speicherdatenträger nach Anspruch 15, **dadurch gekennzeichnet, daß** in dem Speicherelement (34) als Referenz zur Auswertung von Leitinformationen ein Erstbezeichner hinterlegt ist.

18. Tragbarer Speicherdatenträger nach Anspruch 15, **dadurch gekennzeichnet, daß** der Controller (32) bei Erkennen eine Leitinformation eine temporäre Adresse einrichtet und er unter der temporären Adresse Antworten des Zusatzmoduls (40) bereitstellt.

19. Terminal zur Durchführung des Verfahrens nach Anspruch 1, das über eine Standardschnittstelle auf einen tragbaren Speicherdatenträger gemäß Anspruch 15 zugreift, **dadurch gekennzeichnet, daß** es dazu eingerichtet ist, zu für das Zusatzmodul (40) bestimmten Anwendungsdaten eine Leitinformation zu erzeugen.

20. Terminal nach Anspruch 19, **dadurch gekennzeichnet, daß** die Standardschnittstelle (25,35) ein Schreib- und/oder Lesegerät für SD Memory Cards, Multimedia Cards, CompactFlash-Karten und/oder für USB-Speichersticks ist.

## Claims

1. A method for accessing a portable memory data carrier, having a controller for managing a standardized memory element and an additional module, wherein application data are produced that are intended for the additional module (40) and contain an access thereto,
**characterized by** the following steps of:
- generating routing information containing an identifier which can be recognized by the controller (32),
- combining the routing information and the application data to form a data stream,
- embedding the data stream in at least one data block in accordance with a transmission protocol provided for accessing the memory element (34),
- wherein, if the amount of application data is greater than a data block in accordance with the transmission protocol provided for the access to the memory element (34), the application data are divided into several partial data blocks, each partial data block is combined with routing information to form a data stream, and each data stream is embedded in a data block, so that the application data in this case are present in several data blocks,
- allocating the data block or data blocks to an access command containing an address of the memory element (34) and a specification of the access (open, write, read),
- transmitting the one or several data block(s) with the access command to the memory data carrier (30) in the transmission protocol coordinated with the memory element (34),
- determining whether a data block that has come in on the portable memory data carrier (30) contains routing information,
- forwarding the application data contained in a data block to the additional module (40) if the data block contains routing information,
- executing the access specified in the access command at the transferred address in the memory element (34) if the data block does not contain routing information.

2. The method according to claim 1, **characterized in that** the identifier is a character string with a defined number of characters.

3. The method according to claim 1, **characterized in that** the identifier is allocated identically to a group of memory data carriers (30) as a first identifier and is deposited respectively in their memory system.

4. The method according to claim 1, **characterized in that** for each additional module (40) present on a memory data carrier (30) a respective first identifier is deposited.

5. The method according to claim 1, **characterized in that** an identifier is generated dynamically during a data exchange between a terminal (10) and a memory data carrier (30).

6. The method according to claim 5, **characterized in that** a dynamically generated identifier is employed for the duration of a data exchange for tagging application data intended for the additional module (40).

7. The method according to claim 1, **characterized in that** an additional to identifier is generated in order to start, in addition to an already running data exchange, a separate further data exchange between a terminal (10) and a (30) .

8. The method according to claim 1, **characterized in that** the routing information contains a specification of the sender and the destination unit of the application data.

9. The method according to claim 1, **characterized in that** to the application data to be transmitted there is allocated a temporary working address in the memory data carrier (30), at which subsequently a response by the additional module (40) is supplied.

10. The method according to claim 1, **characterized in that** after the transmission of application data it is checked whether at the temporary address a response by the additional module (40) is present.

11. The method according to claim 1, **characterized in that** at the temporary address service data are stored in the memory element (34) which are output if in a subsequent check for whether a response is present the transferred temporary address cannot be recognized.

12. The method according to claim 1, **characterized in that** in the controller (32) a software is supplied which permits analyzing data blocks for the presence of routing information.

13. The method according to claim 1, **characterized in that** the transmission of the application data takes place via a driver (16) arranged for the exchange of data between a terminal (10) and a memory element (34).

14. The method according to claim 1, **characterized in that** the forwarding of application data comprises a processing and/ or converting of the application data into instructions to the additional module (40).

15. A portable memory data carrier for carrying out the method according to claim 1, having at least one additional module (40) and a controller (32) for controlling an access to a memory element (34) which can be accessed by means of data blocks in accordance with a transmission protocol coordinated with the memory element (34),
**characterized in that** the controller (32) comprises an evaluation unit adapted to evaluating incoming data blocks for the presence of routing information, wherein the controller (32) forwards data to at least one additional module (40) if it has determined that a data block contains routing information.

16. The portable memory data carrier according to claim 15, **characterized in that** the controller (32) has a switching unit adapted to processing the access to the memory element (34) and to converting said access into instructions to the additional module (40).

17. The portable memory data carrier according to claim 15, **characterized in that** in the memory element (34) a first identifier is deposited as a reference for evaluating routing information items.

18. The portable memory data carrier according to claim 15, **characterized in that** the controller (32) upon recognizing routing information creates a temporary address and supplies responses by the additional module (40) at the temporary address.

19. A terminal for carrying out the method according to claim 1, which accesses a portable memory data carrier in accordance with claim 15 via a standard interface, **characterized in that** said terminal is adapted to generating routing information for application data intended for the additional module (40).

20. The terminal according to claim 19, **characterized in that** the standard interface (25, 35) is a writing- and/ or reading device for SD memory cards, multimedia cards, compact flash cards and/ or for USB memory sticks.

## Revendications

1. Procédé d'accès à un support de données mémoire portable avec un contrôleur pour la gestion d'un élément standardisé de mémoire et un module supplémentaire, cependant que des données d'application sont créées, lesquelles sont destinées au module supplémentaire (40) et contiennent un accès à ce dernier,
**caractérisé par** les étapes suivantes :
- génération d'une information de guidage qui contient un désignateur pouvant être reconnu par le contrôleur (32),
- assemblage de l'information de guidage et des données d'application de manière à obtenir un train de données,
- intégration du train de données dans au moins un bloc de données conformément à un protocole de transmission prévu pour un accès à l'élément de mémoire (34),
- cependant que, quand la quantité des données d'application est supérieure à un bloc de données conformément au protocole de transmission prévu pour l'accès à l'élément de mémoire (34), les données d'application sont réparties dans plusieurs blocs de données partiels, chaque bloc de données partiel est assemblé avec une information de guidage de manière à obtenir un train de données, et chaque train de données est intégré dans un bloc de données, de telle sorte que les données d'application se trouvent dans ce cas dans plusieurs blocs de données,
- affectation du ou des blocs de données à un ordre d'accès qui contient une adresse de l'élément de mémoire (34) ainsi qu'une indication de l'accès (ouverture, écriture, lecture),
- transmission du un ou des plusieurs blocs de données avec l'ordre d'accès au support de données mémoire (30) dans le protocole de transmission accordé à l'élément de mémoire (34),
- détermination de si un bloc de données arrivé sur le support de données mémoire portable 30) contient une information de guidage,
- transfert des données d'application contenues dans un bloc de données au module supplémentaire (40) quand le bloc de données contient une information de guidage,
- exécution, à l'adresse communiquée dans l'élément de mémoire (34), de l'accès indiqué dans l'ordre d'accès quand le bloc de données ne contient pas d'information de guidage.

2. Procédé selon la revendication 1, **caractérisé en ce que** le désignateur est une chaîne de caractères ayant un nombre défini de caractères.

3. Procédé selon la revendication 1, **caractérisé en ce que** le désignateur est, en tant que premier désignateur, affecté identiquement à un groupe de supports de données mémoires (30) et respectivement enregistré dans leur système de mémoire.

4. Procédé selon la revendication 1, **caractérisé en ce que**, pour chaque module supplémentaire (40) se trouvant sur un support de données mémoire (30), un propre premier désignateur est enregistré.

5. Procédé selon la revendication 1, **caractérisé en ce qu'**un désignateur est généré dynamiquement pendant un échange de données entre un terminal (10) et un support de données mémoire (30).

6. Procédé selon la revendication 5, **caractérisé en ce qu'**un désignateur généré dynamiquement est utilisé pour la durée d'un échange de données pour la désignation de données d'application destinées au module supplémentaire (40).

7. Procédé selon la revendication 1, **caractérisé en ce qu'**un désignateur supplémentaire est généré afin de, en plus d'un échange de données déjà en cours, ouvrir un autre échange de données, distinct, entre un terminal (10) et un support de données mémoire (30).

8. Procédé selon la revendication 1, **caractérisé en ce que** l'information de guidage contient une indication sur l'expéditeur et sur l'unité à laquelle sont destinées les données d'application.

9. Procédé selon la revendication 1, **caractérisé en ce que**, à des données d'application à transmettre, une adresse temporaire de travail dans le support de données mémoire (30) est affectée, sous laquelle, subséquemment, une réponse du module supplémentaire (40) est mise à disposition.

10. Procédé selon la revendication 1, **caractérisé en ce que**, après transmission de données d'application, il est vérifié si, sous l'adresse temporaire, il y a une réponse du module supplémentaire (40).

11. Procédé selon la revendication 1, **caractérisé en ce que**, sous l'adresse temporaire, des données de service sont stockées dans l'élément de mémoire (34), lesquelles sont délivrées quand, lors d'une vérification subséquente pour discerner s'il y a une réponse, l'adresse temporaire transmise ne peut pas être reconnue.

12. Procédé selon la revendication 1, **caractérisé en ce que**, dans le contrôleur (32), un logiciel est mis à disposition, lequel permet l'analyse de blocs de données pour discerner s'il y a une information de guidage.

13. Procédé selon la revendication 1, **caractérisé en ce que** la transmission des données d'application a lieu par l'intermédiaire d'un pilote (16) conçu pour l'échange de données entre un terminal (10) et un élément de mémoire (34).

14. Procédé selon la revendication 1, **caractérisé en ce que** le transfert de données d'application comprend un traitement et/ou une conversion des données d'application en instructions au module supplémentaire (40).

15. Support de données mémoire portable destiné à l'exécution du procédé selon la revendication 1, comprenant au moins un module supplémentaire (40) et un contrôleur (32) pour la commande d'un accès à un élément de mémoire (34) auquel, au moyen de blocs de données, il peut être accédé conformément à un protocole de transmission accordé à l'élément de mémoire (34), **caractérisé en ce que** le contrôleur (32) comprend une unité d'évaluation conçue pour évaluer l'existence d'une information de guidage sur des blocs de données arrivants, cependant que le contrôleur (32) transfère des données à au moins un module supplémentaire (40) s'il a constaté qu'un bloc de données contient une information de guidage.

16. Support de données mémoire portable selon la revendication 15, **caractérisé en ce que** le contrôleur (32) comporte une unité de commutation conçue pour traiter l'accès à l'élément de mémoire (34) et le convertir en instructions au module supplémentaire (40).

17. Support de données mémoire portable selon la revendication 15, **caractérisé en ce que**, dans l'élément de mémoire (34), en tant que référence pour l'évaluation d'informations de guidage, un premier désignateur est enregistré.

18. Support de données mémoire portable selon la revendication 15, **caractérisé en ce que** le contrôleur (32), quand une information de guidage est reconnue, établit une adresse temporaire, et que, sous l'adresse temporaire, il met à disposition des réponses du module supplémentaire (40).

19. Terminal destiné à l'exécution du procédé selon la revendication 1, lequel accède suivant la revendication 15, par l'intermédiaire d'une interface standard, à un support de données mémoire portable, **caractérisé en ce qu'**il est équipé pour générer une information de guidage pour des données d'application destinées au module supplémentaire (40).

20. Terminal selon la revendication 19, **caractérisé en ce que** l'interface standard (25, 35) est un appareil d'écriture ou/ou de lecture pour cartes SD Memory, cartes de multimédia, cartes CompactFlash et/ou pour clés USB.
